# EUROPÄISCHE PATENTSCHRIFT

(11) **EP 1 950 482 B1**
(45) Veröffentlichungstag und Bekanntmachung des Hinweises auf die Patenterteilung: **06.11.2013**
(21) Anmeldenummer: 07018151.6
(22) Anmeldetag: 14.09.2007
(51) Int. Cl.: F16L 27/04

(54) **Leitungsanordnung mit einer Dichtung im Überlappungsbereich**
Line assembly with a seal in the overlap area
Agencement de puissance doté d'un joint dans la zone de recouvrement

(30) Priorität: 18.12.2006 DE 102006060215
(43) Veröffentlichungstag der Anmeldung: 30.07.2008
(73) Patentinhaber: ElringKlinger AG, 72581 Dettingen (DE)
(72) Erfinder: Brenndörfer, Reinhard, 82538 Geretsried (DE)
(74) Vertreter: Hoeger, Stellrecht & Partner Patentanwälte

(56) Entgegenhaltungen:
- EP-A- 0 672 857
- DE-A1-102004 056 429
- DE-C- 434 908
- DE-C- 821 890
- FR-A- 1 236 037

## Beschreibung

### Technisches Gebiet

Die Erfindung betrifft eine Leitungsanordnung gemäß dem Oberbegriff des Patentanspruchs 1.

### Stand der Technik

Aus der DE 821 890 C ist eine Leitungsanordnung bekannt, bei welcher die Leitungsenden metallische Dichtflächen aufweisen. Aus der FR-A-1 236 037 ist eine Leitungsanordnung mit hohlem Dichtring bekannt. Die DE 434 908 C offenbart eine Leitungsanordnung, bei welcher die Leitungsenden aufeinander geschrumpft sind. Die EP 0 672 857 A1 offenbart eine Leitungsanordnung mit einer Abwinklungsbegrenzung. Die DE 10 2004 056 429 A1 offenbart eine Leitungsanordnung mit einem Dichtring aus einem elastischen Material. Die US 2 758 851 A sowie die EP 0 242 868 A1 zeigen eine Leitungsanordnung gemäß dem Oberbegriff des Patentanspruchs 1.

Derartige Leitungsanordnungen sind aus dem Automobilbereich bekannt. Dort sind die Leitungen als Rohrenden ausgebildet, weiche mittels einer Kugelbandschelle verbunden werden. Diese Leitungsanordnungen finden meistens im mittleren und hinteren Bereich der Abgasanlagen von Kraftfahrzeugen Verwendung.

Die Leitungsenden werden ineinander geschoben und durch die Kugelbandschelle fixiert. Hierdurch entsteht eine sehr kompakte Verbindung. Durch die Auswölbung der Rohrenden ist ein Ausrichten oder Verdrehen der Rohrenden gegeneinander im noch unverspannten Zustand problemlos möglich. Nach dem Verspannen durch die Kugelverbandschelle ist eine sichere Fixierung der Leitungsenden sichergestellt.

Kurz nach der Montage der bekannten Leitungsanordnungen weisen diese Leckageraten auf, die sich im Bereich kleiner 2 l/min bei 0,3 bar Innendruck bewegen. Nach längerer Zeit wird diese Leckagerate jedoch überschritten. Unter Umständen kann schon nach wenigen Stunden die genannte Leckagerate überschritten werden, wenn nämlich die Leitungsanordnung über 400°C erhitzt wird.

Die bekannten Leitungsanordnungen können nicht zuverlässig die durch die Euronorm 4 und Euronorm 5 vorgeschriebene Leckagedichtheit erfüllen. Eine moderne Leitungsanordnung darf auch nach längerer Betriebsdauer eine Leckagerate von höchstens 0,2 l/min bei 0,3 bar Innendruck zeigen.

Diese geforderte Dichtheit können die bekannten Leitungsanordnungen nicht dauerhaft gewährleisten.

### Darstellung der Erfindung

Der Erfindung liegt die Aufgabe zu Grunde, eine Leitungsanordnung zu realisieren, die selbst nach längerer Betriebsdauer eine hohe Dichtheit gewährleistet.

Die vorliegende Erfindung löst die zuvor genannte Aufgabe durch die Merkmale des Patentanspruchs 1.

Erfindungsgemäß ist erkannt worden, dass die Positionierung einer Dichtung zwischen den sich überlappenden Leitungsenden das Austreten von Gasen wirksam verhindert. Erfindungsgemäß ist insbesondere erkannt worden, dass eine Dichtung auf Grund ihrer Weichheit auftretende Spalte wirksam verschließen kann.

Bei Kraftfahrzeugen treten auf Grund von Vibrationen, die durch den Motor oder die Fahrbahn angeregt werden, zwangsläufig kleine Spalte und Versatzräume auf. Bei den gattungsbildenden Leitungsanordnungen liegen die Mantelflächen der Leitungsenden lediglich aneinander und können nur durch plastische Verformung der anliegenden gewölbten Flächen abgedichtet werden. Die außen liegenden Mantelflächen sind ständig Witterungseinflüssen ausgesetzt.

Erfindungsgemäß ist erkannt worden, dass die Positionierung einer Dichtung im Inneren der Leitungsanordnung, nämlich an den inneren Mantelflächen anliegend, die Dichtung zuverlässig vor Witterungseinflüssen schützt. Die im Inneren der Leitungsanordnung positionierte Dichtung wird durch den Mantel zumindest eines Leitungsendes abgeschirmt. Durch diese Ausgestaltung ist erfindungsgemäß realisiert, dass die Dichtung auch nach langer Betriebsdauer noch ihre Funktion erfüllen und die Leitungsanordnung zuverlässig abdichten kann.

Dichtungen aus einem Weichstoffstrang, um welchen eine Metallfolie herumgewickelt ist, werden üblicherweise zusammen mit der Metallfolie in Form gepresst. Erfindungsgemäß weist die Dichtung einen Weichstoff auf, der zusammen mit einer Metallfolie aufgewickelt ist. Hierdurch erhält der Dichtring eine hohe Verformbarkeit Dies erlaubt dem Dichtring, sich den Dimensionen des durch die Leitungsenden ausgebildeten Einbauraums anzupassen.

Vor diesem Hintergrund ist als Weichstoff bevorzugt Graphit oder Glimmer verwendet. Es ist denkbar, dass als Weichstoff asbestfreie Folien verwendet werden. Graphit ist besonders alterungsbeständig und behält eine dauerhafte Federeigenschaft. Aufgrund dieser Eigenschaft des Graphits können Mikrobewegungen der Leitungsenden infolge von Schwingungen kompensiert werden. Glimmer eignet sich für Dichtungen, die hohen Temperaturen standhalten müssen. Die Weichstoffe werden vorzugsweise zusammen mit einer Stahlfolie gewickelt, da Stahlfolie den Dichtring gegen Ausblasen sichert. Dies erlaubt, eine hohe Dichtheit der Leitungsanordnung auch bei hohen Innendrücken zu gewährleisten.

Die Aufnahme könnte als stufenförmige Absetzung ausgebildet sein. Diese konkrete Ausgestaltung ist in fertigungstechnischer Hinsicht besonders vorteilhaft, da eine Stufenform problemlos einem Leitungsende aufgeprägt werden kann. Denkbar ist auch, die stufenförmige Absetzung durch ein Tiefziehverfahren einem Leitungsende aufzuprägen.

Die Leitungsenden könnten dabei aus Metall gefertigt sein. Die Verwendung eines Metalls erlaubt eine besonders stabile und temperaturbeständige Ausgestaltung der Leitungsanordnung, so dass diese in Abgasanlagen von Kraftfahrzeugen Verwendung finden kann.

Die Aufnahme könnte eine orthogonal zur Leitungsachse orientierte Anlagefläche und eine parallel zur Leitungsachse orientierte Aufschiebefläche aufweisen. Diese konkrete Ausgestaltung erlaubt ein problemloses Aufschieben der Dichtung auf das Leitungsende, dem die Aufnahme zugeordnet ist. Durch die senkrecht zur Leitungsachse orientierte Anlagefläche werden Fehler bei der Montage nahezu ausgeschlossen, da der Monteur einen Hinweis erhält, wo die Dichtung anliegen muss.

Die Aufnahme könnte im zweiten Leitungsende ausgebildet sein. Hierdurch ist sichergestellt, dass das erste Leitungsende die Dichtung gegen äußere Einflüsse abdichten kann. Durch die Ausbildung der Aufnahme im zweiten Leitungsende wird durch den Mantel des ersten Leitungsendes und des zweiten Leitungsendes ein Einbauraum geschaffen, in dem die Dichtung gekammert ist.

Vor diesem Hintergrund könnte die Aufnahme in einem verdickten Bereich ausgebildet sein. Durch diese konkrete Ausgestaltung ist ein sehr stabiles Leitungsende realisierbar.

Das zweite Leitungsende könnte einen Anschlagbereich aufweisen, an dem das erste Leitungsende an dem zweiten Leitungsende anstößt. Diese konkrete Ausgestaltung begrenzt die axiale Verschiebbarkeit der Leitungsenden gegeneinander. Durch geeignete Dimensionierung des Anschlagsbereichs kann die Kompression der Dichtung durch die gegeneinander gepressten Leitungsenden eingestellt werden.

Das zweite Leitungsende könnte eine Schließflanke aufweisen, die an der Innenwandung des ersten Leitungsendes anliegt. Diese konkrete Ausgestaltung bewirkt vorteilhaft eine Abdichtung des Einbauraums, In welchem die Dichtung positioniert ist. Hierdurch wird ein Spüleffekt durch Abgase an der Frontseite der Dichtung vermieden. Des Weiteren könnte die Schließflanke konisch verlaufend ausgebildet sein. Diese konkrete Ausgestaltung erlaubt ein problemloses Aufschieben der Dichtung auf das zweite Leitungsende. Ein Abscheuem der Dichtung oder ein Verklemmen der Dichtung beim Aufschieben auf das zweite Leitungsende werden wirksam vermieden.

Die Dichtung könnte als Dichtring ausgebildet sein. Ein Dichtring lässt sich problemlos fertigen und kann das zweite Leitungsende umfänglich umgeben. Ein Dichtring lässt sich problemlos auf eine rohrförmige Leitung aufschieben.

Der Dichtring könnte eine Dichtflanke aufweisen. Die Dichtflanke könnte derart abgeschrägt ausgebildet sein, dass die Innenwandung des ersten Leitungsendes am Dichtung anliegt. Diese konkrete Ausgestaltung erhöht die Lebensdauer des Dichtrings, da dieser nur schonend gestaucht wird, wenn die Leitungsenden gegeneinander gepresst werden. Die Dichtflanke erhöht des Weiteren die Anlagefläche des Dichtrings an der Innenwandung des ersten Leitungsendes.

Zumindest ein Leitungsende könnte zumindest abschnittsweise gewölbt ausgebildet sein. Diese Ausgestaltung erlaubt eine kostengünstige Ausformung eines Leitungsendes zur Aufnahme des anderen Leitungsendes, da Wölbungen durch Tiefziehprozesse ausgebildet werden können. Gewölbte Bereiche können des Weiteren auftretende Spannungen durch Versatz der Leitungsenden besonders gut aufnehmen, ohne die Dichtheit zu beeinträchtigen.

Die Leitungsenden könnten kugelförmig gewölbt sein und zumindest bereichsweise konzentrisch aneinander liegen. Diese konkrete Ausgestaltung erlaubt ein problemloses Verkippen und Verwinkeln der Leitungsenden gegeneinander.

Die Leitungsenden könnten von einer Kugelbandschelle umgriffen sein. Die Verwendung einer Kugelbandschelle erlaubt das feste Aneinanderpressen kugelförmig ausgebildeter Leitungsenden unter Verwendung nur einer Schraube. Hierdurch ist die Montage der Leitungsanordnung besonders problemlos zu realisieren.

Die Leitungsenden könnten Flansche aufweisen, die mit den Leitungsenden einstückig ausgebildet sind. Hierdurch werden Lagerhaitungskosten minimiert und ein teilearmer Aufbau realisiert.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Leitungsanordnung anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer perspektivischen Ansicht eine Leitungsanordnung, in der die Leitungsenden von einer Kugelbandschelle umgriffen sind,
- Fig. 2: eine Schnittansicht der Leitungsanordnung gemäß Fig. 1,
- Fig. 3: eine Detailansicht der Fig. 2,
- Fig. 4: eine Schnittansicht des zweiten Leitungsendes,
- Fig. 5: eine Schnittansicht einer Leitungsanordnung mit einem verdickten zweiten Leitungsende und
- Fig. 6: eine Schnittansicht einer Leitungsanordnung mit Leitungsenden, an denen Verbindungsflansche angeordnet sind.

### Ausführung der Erfindung

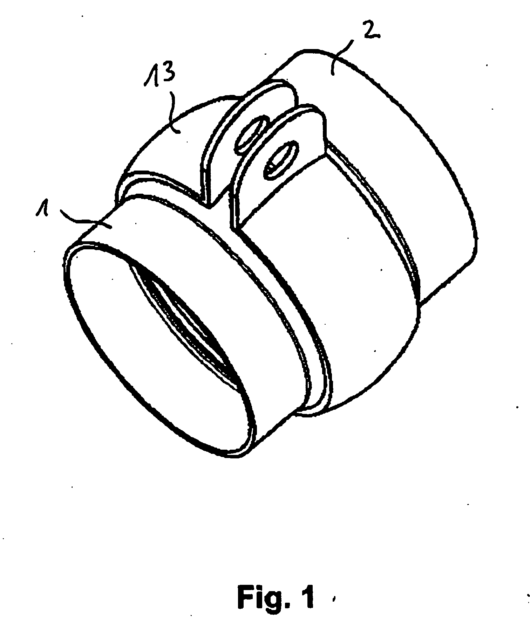

Fig. 1 zeigt eine Leitungsanordnung, welche zwei einander zugewandte Leitungsenden 1 und 2 umfasst. Die Leitungsenden 1 und 2 sind zumindest abschnittsweise gewölbt ausgebildet. Die Leitungsenden 1 und 2 sind von einer Kugelbandschelle 13 umgriffen.

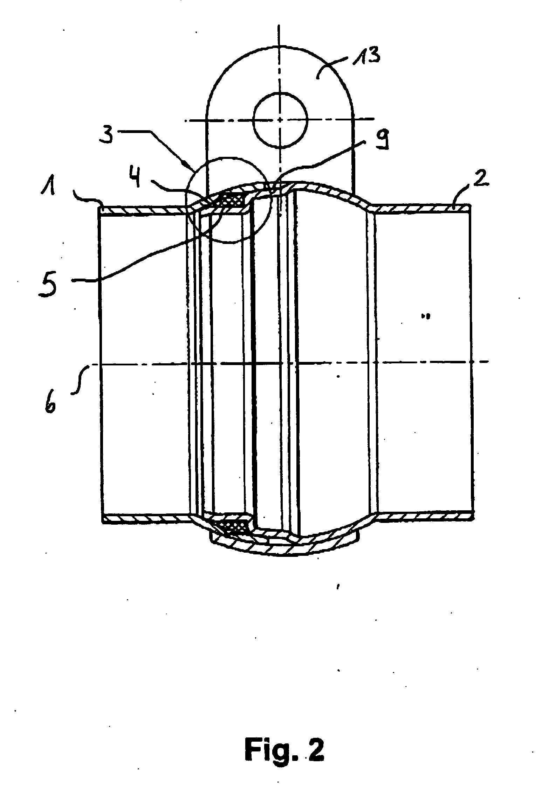

Fig. 2 zeigt die Leitungsanordnung gemäß Fig. 1 in einer Schnittansicht. Die Leitungsanordnung gemäß Fig. 2 umfasst zwei einander zugewandte Leitungsenden 1, 2. Die Leitungsenden 1, 2 sind zumindest abschnittsweise gewölbt ausgebildet. Das erste Leitungsende 1 umgreift das zweite Leitungsende 2 unter Ausbildung eines Überlappungsbereichs 3. Der Überlappungsbereich 3 ist in Fig. 2 durch einen Kreis besonders hervorgehoben. Im Überlappungsbereich 3 ist eine Aufnahme 4 für eine Dichtung 5 ausgebildet, die zwischen dem ersten Leitungsende 1 und dem zweiten Leitungsende 2 positioniert ist.

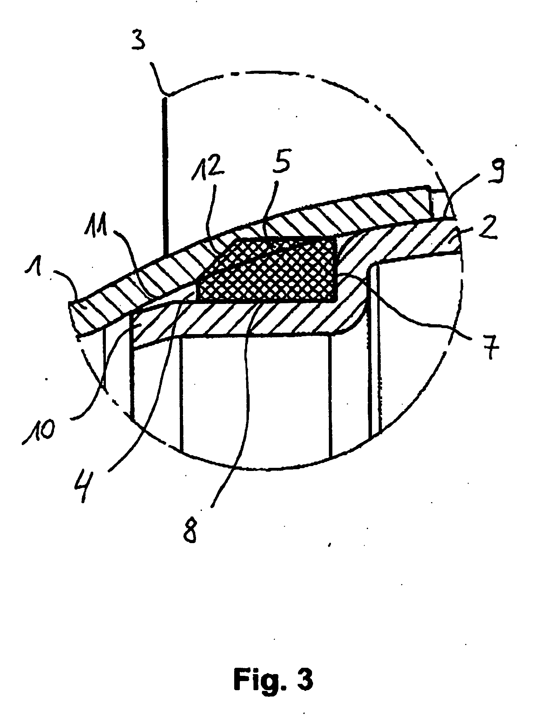

Fig. 3 zeigt in einer vergrößerten Ansicht den Überlappungsbereich 3 gemäß Fig. 2. Die Aufnahme 4 ist als stufenförmige Absetzung ausgebildet. Dabei ist die Aufnahme 4 im zweiten Leitungsende 2 ausgebildet. Ganz konkret ist die stufenförmige Absetzung dem Mantel des zweiten Leitungsendes 2 aufgeprägt.

Die Aufnahme 4 weist eine orthogonal zur Leitungsachse 6 orientierte Anlagefläche 7 und eine parallel zur Leitungsachse 6 orientierte Aufschiebefläche 8 auf.

Das zweite Leitungsende 2 weist einen Anschlagbereich 9 auf, an dem das erste Leitungsende 1 an dem zweiten Leitungsende 2 anstößt.

Das zweite Leitungsende weist eine Schließflanke 10 auf, die an der Innenwandung 11 des ersten Leitungsendes 1 anliegt. Die Anlage der Schließflanke 10 kann linienförmig ausgebildet sein. Hierdurch wird der Einbauraum, in dem die Dichtung 5 positioniert ist, abgedichtet.

Die Dichtung 5 ist als Dichtring ausgebildet, der eine Dichtflanke 12 aufweist. Die Dichtflanke 12 ist abgeschrägt und liegt ebenfalls an der Innenwandung 11 des ersten Leitungsendes 1 an. Die Dichtung 5 weist einen Weichstoff auf, der in einer Metallfolie aufgewickelt ist.

In den Figuren 1 bis 3 ist gezeigt, dass die Leitungsenden 1, 2 kugelförmig gewölbt sind, und zumindest bereichsweise konzentrisch aneinander liegen. Dabei umgreift das erste Leitungsende 1 das zweite Leitungsende 2.

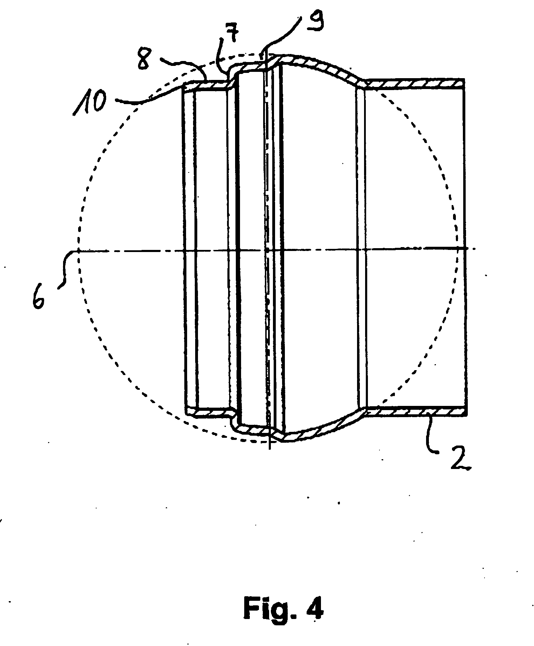

Fig. 4 zeigt in einer Schnittansicht das Leitungsende 2, welches bereichsweise kugelförmig ausgebildet ist. Dem kugelförmig ausgebildeten Bereich ist eine Schließflanke 10, ein Anschlagbereich 9, eine parallel zur Leitungsache 6 orientierte Aufschiebefläche 8 und eine orthogonal zur Leitungsachse 6 orientierte Anlagefläche 7 aufgeprägt.

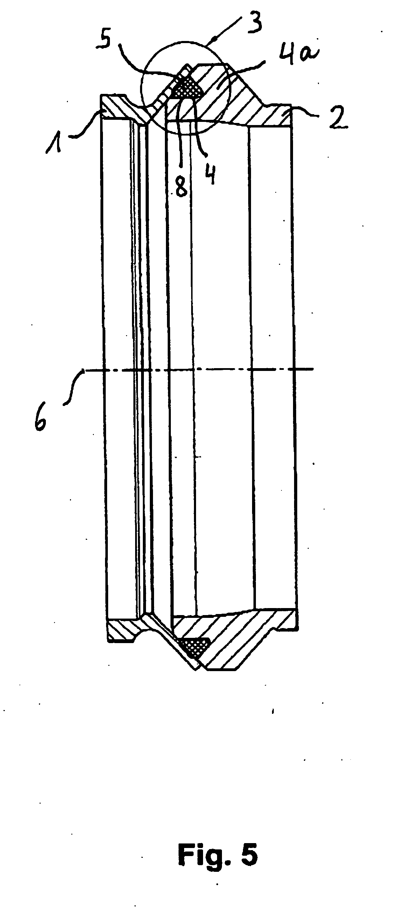

Fig. 5 zeigt eine Schnittansicht einer Leitungsanordnung mit einem verdickten zweiten Leitungsende 2. Die Aufnahme 4 ist in einem verdickten Bereich 4a ausgebildet. In der Aufnahme 4 ist die Dichtung 5 positioniert. Die Aufnahme 4 weist eine parallel zur Leitungsachse 6 orientierte Aufschiebefläche 8 auf.

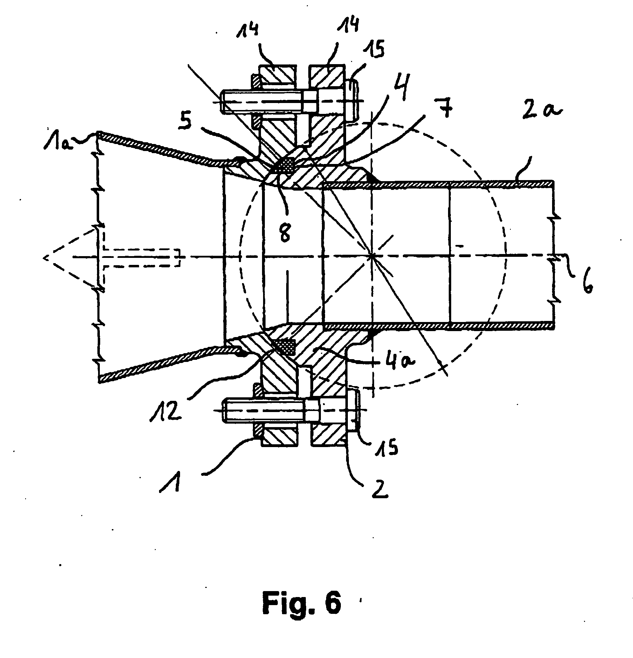

Fig. 6 zeigt eine Schnittansicht einer Leitungsanordnung mit Leitungsenden 1, 2, an denen Verbindungsflansche 14 angeordnet sind. Die Leitungsenden 1, 2 sind durch Schrauben 15 miteinander verschraubt. Die Leitungsenden 1, 2 sind als Endstücke ausgebildet, denen Rohre 1a, 2a zugeordnet sind. Die Rohre 1a, 2a können mit den Endstücken verschweißt, verschraubt oder verpresst sein.

Die Aufnahme 4 ist in einem verdickten Bereich 4a ausgebildet, In der Aufnahme 4 ist die Dichtung 5 positioniert. Die Aufnahme 4 weist eine orthogonal zur Leitungsachse 6 orientierte Anlagefläche 7 und eine parallel zur Leitungsachse 6 orientierte Aufschiebefläche 8 auf.

Die in den Figuren 1 bis 6 gezeigten Leitungsanordnungen bzw. Leitungsenden finden in Abgasanlagen von Kraftfahrzeugen Verwendung. Die hier beschriebenen Leitungsanordnungen zeigen eine maximale Leckage von 0,1 I/min.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Leitungsanordnung, umfassend zwei einander zugewandte Leitungsenden (1, 2) und eine Dichtung, wobei das erste Leitungsende (1) das zweite Leitungsende (2) unter Ausbildung eines Überlappungsbereichs (3) zumindest teilweise umgreift und im Überlappungsbereich (3) eine Aufnahme (4) für die aus einem Weichstoff und einer Metallfolie gebildete, zwischen dem ersten Leitungsende (1) und dem zweiten Leitungsende (2) positionierte Dichtung (5) ausgebildet ist, **dadurch gekennzeichnet, dass** der Weichstoff zusammen mit der Metallfolie aufgewickelt ist.

2. Leitungsanordnung nach Anspruch 1, **dadurch gekennzeichnet, dass** der Weichstoff Graphit oder Glimmer ist.

3. Leitungsanordnung nach Anspruch 1 oder 2, **dadurch gekennzeichnet, dass** die Metallfolie eine Stahlfolie ist.

4. Leitungsanordnung nach einem der Ansprüche 1 bis 3, **dadurch gekennzeichnet, dass** die Aufnahme (4) als stufenförmige Absetzung ausgebildet ist.

5. Leitungsanordnung nach einem der Ansprüche 1 bis 4, **dadurch gekennzeichnet, dass** die Aufnahme (4) eine orthogonal zur Leitungsachse (6) orientierte Anlagefläche (7) und eine parallel zur Leitungsachse (6) orientierte Aufschiebefläche (8) aufweist.

6. Leitungsanordnung nach einem der Ansprüche 1 bis 5, **dadurch gekennzeichnet, dass** die Aufnahme (4) im zweiten Leitungsende (2) ausgebildet ist.

7. Leitungsanordnung nach einem der Ansprüche 1 bis 6, **dadurch gekennzeichnet, dass** die Aufnahme (4) in einem verdickten Bereich (4a) ausgebildet ist.

8. Leitungsanordnung nach einem der Ansprüche 1 bis 7, **dadurch gekennzeichnet, dass** das zweite Leitungsende (2) einen Anschlagbereich (9) aufweist, an dem das erste Leitungsende (1) an dem zweiten Leitungsende (2) anstößt.

9. Leitungsanordnung nach einem der Ansprüche 1 bis 8, **dadurch gekennzeichnet, dass** das zweite Leitungsende (2) eine Schließflanke (10) aufweist, die an der Innenwandung (11) des ersten Leitungsendes (1) anliegt.

10. Leitungsanordnung nach einem der Ansprüche 1 bis 9, **dadurch gekennzeichnet, dass** die Dichtung (5) als Dichtring ausgebildet ist.

11. Leitungsanordnung nach Anspruch 10, **dadurch gekennzeichnet, dass** der Dichtring (5) eine Dichtflanke (12) aufweist.

12. Leitungsanordnung nach einem der Ansprüche 1 bis 11, **dadurch gekennzeichnet, dass** zumindest ein Leitungsende (1, 2) zumindest abschnittsweise gewölbt ausgebildet ist.

13. Leitungsanordnung nach einem der Ansprüche 1 bis 12, **dadurch gekennzeichnet, dass** die Leitungsenden (1,2) kugelförmig gewölbt sind und zumindest bereichsweise konzentrisch aneinander liegen.

14. Leitungsanordnung nach einem der Ansprüche 1 bis 13, **dadurch gekennzeichnet, dass** die Leitungsenden (1, 2) von einer Kugelbandschelle (13) umgriffen sind.

15. Leitungsanordnung nach einem der Ansprüche 1 bis 13, **dadurch gekennzeichnet, dass** die Leitungsenden (1,2) Flansche (14) ausweisen.

## Claims

1. Line assembly, comprising two line ends (1, 2) facing each other, and a seal, wherein the first line end (1) grips at least partially around the second line end (2), thereby forming an area of overlap (3), and formed in the area of overlap (3) is a seat (4) for the seal (5) formed from a soft material and a metal foil and positioned between the first line end (1) and the second line end (2), **characterized in that** the soft material is wound up together with the metal foil.

2. Line assembly in accordance with claim 1, **characterized in that** the soft material is graphite or mica.

3. Line assembly in accordance with claim 1 or 2, **characterized in that** the metal foil is a steel foil.

4. Line assembly in accordance with any one of claims 1 to 3, **characterized in that** the seat (4) is formed as stepped shoulder.

5. Line assembly in accordance with any one of claims 1 to 4, **characterized in that** the seat (4) comprises an abutment surface (7) oriented orthogonally to the line axis (6) and a slide-on surface (8) oriented parallel to the line axis (6).

6. Line assembly in accordance with any one of claims 1 to 5, **characterized in that** the seat (4) is formed in the second line end (2).

7. Line assembly in accordance with any one of claims 1 to 6, **characterized in that** the seat (4) is formed in a thickened area (4a).

8. Line assembly in accordance with any one of claims 1 to 7, **characterized in that** the second line end (2) comprises a stop area (9) which the first line end (1) strikes at the second line end (2).

9. Line assembly in accordance with any one of claims 1 to 8, **characterized in that** the second line end (2) comprises a closure flank (10) which lies against the inside wall (11) of the first line end (1).

10. Line assembly in accordance with any one of claims 1 to 9, **characterized in that** the seal (5) is formed as sealing ring.

11. Line assembly in accordance with claim 10, **characterized in that** the sealing ring (5) comprises a sealing flank (12).

12. Line assembly in accordance with any one of claims 1 to 11, **characterized in that** at least one line end (1, 2) is of arched configuration at least in sections thereof.

13. Line assembly in accordance with any one of claims 1 to 12, **characterized in that** the line ends (1, 2) are spherically arched and lie concentrically against each other at least in areas thereof.

14. Line assembly in accordance with any one of claims 1 to 13, **characterized in that** the line ends (1, 2) are embraced by a spherical clip (13).

15. Line assembly in accordance with any one of claims 1 to 13, **characterized in that** the line ends (1, 2) comprise flanges (14).

## Revendications

1. Disposition de conduites comprenant deux extrémités de conduite (1, 2) orientées face à face et un joint, la première extrémité (1) enserrant la deuxième extrémité (2) au moins partiellement en formant une zone de recouvrement (3), ladite zone de recouvrement (3) comportant un logement (4) pour le joint (5), positionné entre la première extrémité (1) et la deuxième extrémité (2), joint composé d'une matière souple et d'un film métallique, **caractérisé en ce que** la matière souple et le film métallique sont enroulés ensemble.

2. Disposition de conduites selon la revendication 1, **caractérisée en ce que** la matière souple est du graphite ou du mica.

3. Disposition de conduites selon la revendication 1 ou 2, **caractérisée en ce que** le film métallique est un film en acier.

4. Disposition de conduites selon une des revendications 1 à 3, **caractérisée en ce que** le logement (4) se présente sous forme d'un épaulement à gradins.

5. Disposition de conduites selon une des revendications 1 à 4, **caractérisée en ce que** le logement (4) présente une surface d'appui (7) orientée orthogonalement par rapport à l'axe de la conduite (6) et une surface coulissante (8) orientée parallèlement à l'axe de la conduite (6).

6. Disposition de conduites selon une des revendications 1 à 5, **caractérisée en ce que** le logement (4) se trouve dans la deuxième extrémité (2).

7. Disposition de conduites selon une des revendications 1 à 6, **caractérisée en ce que** le logement (4) se trouve dans une zone épaissie (4a).

8. Disposition de conduites selon une des revendications 1 à 7, **caractérisée en ce que** la deuxième extrémité (2) présente une zone de butée (9) sur laquelle la première extrémité (1) bute contre la deuxième extrémité (2).

9. Disposition de conduites selon une des revendications 1 à 8, **caractérisée en ce que** la deuxième extrémité (2) présente un flanc de fermeture (10) qui est en contact avec la paroi intérieure (11) de la première extrémité (1).

10. Disposition de conduites selon une des revendications 1 à 9, **caractérisée en ce que** le joint (5) se présente sous forme de joint annulaire.

11. Disposition de conduites selon la revendication 10, **caractérisée en ce que** le joint annulaire (5) présente un flanc d'étanchéité (12).

12. Disposition de conduites selon une des revendications 1 à 11, **caractérisée en ce que** au moins une extrémité (1,2) est au moins partiellement bombée.

13. Disposition de conduites selon une des revendications 1 à 12, **caractérisée en ce que** les extrémités (1, 2) sont bombées de façon sphérique et sont en contact de façon concentrique au moins sur certaines parties.

14. Disposition de conduites selon une des revendications 1 à 13, **caractérisée en ce que** les extrémités (1, 2) sont enserrées par un collier à bride à portée sphérique (13).

15. Disposition de conduites selon une des revendications 1 à 13, **caractérisée en ce que** les extrémités (1, 2) présentent des oreilles (14).
